(19) Europäisches Patentamt
European Patent Office
Office européen des brevets

(11) **EP 3 187 510 A1**

(12) **EUROPEAN PATENT APPLICATION**

(43) Date of publication:
**05.07.2017 Bulletin 2017/27**

(21) Application number: **15202944.3**

(22) Date of filing: **29.12.2015**

(51) Int Cl.:
***C08B 37/00*** *(2006.01)* ***C08B 37/08*** *(2006.01)*
***C08J 3/075*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Galderma S.A.**
**6330 Cham (CH)**

(72) Inventor: **OLSSON, Johan**
**167 33 BROMMA (SE)**

(74) Representative: **Awapatent AB**
**P.O. Box 45086**
**104 30 Stockholm (SE)**

(54) **CARBOHYDRATE CROSSLINKER**

(57) The invention relates to a hydrogel product comprising glycosaminoglycan molecules as the swellable polymer, wherein the glycosaminoglycan molecules are covalently crosslinked via crosslinks comprising a spacer group selected from the group consisting of di-, tri-, tetra-, and oligosaccharides.

EP 3 187 510 A1

**Description**

Technical field of the invention

The present invention relates to the field of hydrogels containing crosslinked polysaccharides and the use of such hydrogels in medical and/or cosmetic applications. More specifically, the present invention is concerned with hydrogels made of crosslinked glycosaminoglycans, particularly crosslinked hyaluronic acid, chondroitin or chondroitin sulfate.

Background to the invention

Water-absorbing gels, or hydrogels, are widely used in the biomedical field. They are generally prepared by chemical crosslinking of polymers to infinite networks. While many polysaccharides absorb water until they are completely dissolved, crosslinked gels of the same polysaccharides can typically absorb a certain amount of water until they are saturated, i.e. they have a finite liquid retention capacity, or swelling degree.

Hyaluronic acid, chondroitin and chondroitin sulfate are well-known biocompatible polymers. They are naturally occurring polysaccharides belonging to the group of glycosaminoglycans (GAGs). All GAGs are negatively charged heteropolysaccharide chains which have a capacity to absorb large amounts of water.

Hyaluronic acid (HA) is one of the most widely used biocompatible polymers for medical and cosmetic use. HA is a naturally occurring polysaccharide belonging to the group of glycosaminoglycans (GAGs). Hyaluronic acid and products derived from hyaluronic acid are widely used in the biomedical and cosmetic fields, for instance during viscosurgery and as a dermal filler.

Chondroitin sulfate (CS) is a highly abundant GAG found in the connective tissues of mammals where it, together with other sulfated GAGs, is bound to proteins as part proteoglycans. It has previously been shown that hydrogels containing CS successfully can be used in biomedical applications due to their resemblance to the natural extra cellular matrix (Lauder, R.M., Complement Ther Med 17: 56-62, 2009). Chondroitin sulfate is also used in the treatment of osteoarthritis, e.g. as a dietary supplement.

Crosslinking of the glycosaminoglycans prolongs the duration of the degradable polymers that make up the network, which is useful in may application. However, the crosslinking can also reduce the native properties of the glycosaminoglycans. Hence, it is typically desired to maintain a low degree of modification by efficient crosslinking to conserve the native properties and effects of the glycosaminoglycan itself.

Summary of the invention

It is an object of the present invention to provide a hydrogel having a glycosaminoglycan (GAG) as the swellable polymer.

It is a further object of the present invention to provide a method for crosslinking GAG molecules with reduced effect of the native properties of the GAG molecules.

It is also an object of the present invention to provide a method for preparing hydrogels of GAG molecules by mild and efficient routes.

For these and other objects that will be evident from this disclosure, the present invention provides according to a first aspect a hydrogel product comprising glycosaminoglycan molecules as the swellable polymer, wherein the glycosaminoglycan molecules are covalently crosslinked via crosslinks comprising a spacer group selected from the group consisting of di-, tri-, tetra-, and oligosaccharides.

With reference to the inventive processes of preparing hydrogel products described herein, the term "crosslinker" refers to a molecule having two or more functional groups, particularly nucleofile functional groups attached to a non reactive spacer group, particularly a di-, tri-, tetra-, or oligosaccharide. Each of the two or more functional groups is capable of reacting with carboxylic acid groups on the GAG molecules to form stable covalent bonds. Preferably, the crosslinker consists of the two or more functional groups and the spacer.

With reference to the inventive hydrogel products described herein, the term "crosslink" refers to the portion, or residue, of the crosslinker by which the GAG molecules are covalently linked after crosslinking. The crosslink typically consists of i) the spacer group and ii) the binding groups formed upon reaction of the functional groups of the crosslinker with the carboxylic acid groups on the GAG. The spacer group may for example be comprised of a hyaluronic acid tetrasaccharide, hyaluronic acid hexasaccharide, trehalose, lactose, maltose, sucrose, cellobiose or raffinose residue.

Crosslinking via crosslinkers comprising a spacer group selected from the group consisting of di-, tri-, tetra-, and oligosaccharides provides a hydrogel product based entirely on carbohydrate type structures or derivatives thereof, which minimizes the disturbance of the crosslinking on the native properties of the glycosaminoglycans. The di-, tri-, tetra-, or oligosaccharide is preferably well defined in terms of structure and molecular weight. Preferably the spacer is

selected from one specific di-, tri-, tetra-, or oligosaccharide structure. Preferably, the di-, tri-, tetra-, or oligosaccharide is mono-disperse or has a narrow molecular weight distribution. Using well defined di-, tri-, tetra-, or oligosaccharide based crosslinkers together with a highly efficient condensation reaction allows the product to be assembled in a controlled fashion. The crosslinker itself can also contribute to maintained or increased properties of the hydrogel, for example when crosslinking with a structure that correlates to hyaluronic acid (e.g. diamino hyaluronic acid tetrasaccharide) or when crosslinking with a structure with high water retention properties (e.g. trehalose).

The GAG may for example be sulfated or non-sulfated glycosaminoglycans such as hyaluronan, chondroitin sulphate, heparan sulphate, heparosan, heparin, dermatan sulphate and keratan sulphate. In some embodiments the GAG is hyaluronic acid, chondroitin or chondroitin sulfate. In a preferred embodiment the GAG is hyaluronic acid.

The present invention provides according to a second aspect a process of preparing a hydrogel product comprising crosslinked glycosaminoglycan molecules, comprising the steps of:

(a) providing a solution of glycosaminoglycan molecules;

(b) activating carboxyl groups on the glycosaminoglycan molecules with a coupling agent to form activated, glycosaminoglycan molecules;

(c) crosslinking the activated glycosaminoglycan molecules via their activated carboxyl groups using a di- or multinucleophile functional crosslinker comprising a spacer group selected from the group consisting of di-, tri-, tetra-, and oligosaccharides to obtain crosslinked glycosaminoglycan molecules.

The present invention involves crosslinking of glycosaminoglycan molecules by covalent bonds, preferably amide bonds, typically using an activating agent for the carboxyl groups on the glycosaminoglycan molecule backbone and a di- or multinucleophile functional crosslinker comprising a spacer group selected from the group consisting of di-, tri-, tetra-, and oligosaccharides. Crosslinking according to the inventive method can be achieved by mild and efficient routes resulting in high yields with minimal degradation of the GAG molecules.

The di- or multinucleophile functional crosslinker contains a spacer group selected from the group consisting of di-, tri-, tetra-, and oligosaccharides, which remains in the crosslinks between the GAG molecules. The di- or multinucleophile functional di-, tri-, tetra-, and oligo-saccharides comprise at least two nucleophile functional groups attached thereto. The at least two nucleophile functional groups are preferably separated by the spacer group selected from the group consisting of di-, tri-, tetra-, and oligosaccharides.

The di- or multinucleophile functional crosslinker comprises two or more functional groups capable of reacting with functional carboxyl groups of the GAG, resulting in the formation of covalent bonds, preferably amide bonds. The nucleophile functional groups are preferably capable of reacting with carboxyl groups on the glycosaminoglycan molecule to form amide bonds. In some embodiments the nucleophile functional groups of the di-, tri-, tetra-, and oligosaccharides are selected from the group consisting of primary amine, hydrazine, hydrazide, carbazate, semi-carbazide, thiosemicarbazide, thiocarbazate and aminoxy.

The di- or multinucleophile functional di-, tri-, tetra-, and oligo-saccharides may be derived from nucleophile functional polysaccharides, such as chitobiose derived from chitin. The di- or multinucleophile functional di-, tri-, tetra-, and oligo-saccharides may also be di-, tri-, tetra-, and oligosaccharides which have been modified by introduction of two or more nucleophile functional groups.

A preferred group of di- or multinucleophile functional crosslinker includes homo- or heterobifunctional primary amines, hydrazines, hydrazides, carbazates, semi-carbazides, thiosemicarbazides, thiocarbazates and aminoxy.

In a certain embodiments, the activation step (b) and the crosslinking step (c) occur simultaneously. In other embodiments, the activation step (b) occurs prior to and separately from the crosslinking step (c).

In a preferred embodiment, step (c) further comprises providing particles of the crosslinked GAG molecule, having an average size in the range of 0.01-5 mm, preferably 0.1-0.8 mm.

In one preferred embodiment, the coupling agent of step (b) is a peptide coupling reagent. The peptide coupling reagent may be selected from the group consisting of triazine-based coupling reagents, carbodiimide coupling reagents, imidazolium-derived coupling reagents, Oxyma and COMU. A preferred peptide coupling reagent is a triazine-based coupling reagent, including the group consisting of 4-(4,6-dimethoxy-1,3,5-triazin-2-yl)-4-methylmorpholinium chloride (DMTMM) and 2-chloro-4,6-dimethoxy-1,3,5-triazine (CDMT), preferably DMTMM. Another preferred peptide coupling reagent is a carbodiimide coupling reagent, preferably N-(3-dimethylaminopropyl)-N'-ethylcarbodiimide (EDC) combined with N-hydroxysuccinimide (NHS).

According to a related aspect, the present invention also provides use of the hydrogel product as a medicament, such as in the treatment of soft tissue disorders. There is provided a method of treating a patient suffering from a soft tissue disorder by administering to the patient a therapeutically effective amount of the hydrogel product. There is also provided a method of providing corrective or aesthetic treatment to a patient by administering to the patient a therapeutically effective amount of the hydrogel product.

Other aspects and preferred embodiments of the present invention will be evident from the following detailed

disclosure of the invention and the appended claims.

Itemized listing of preferred embodiments

1. A hydrogel product comprising glycosaminoglycan molecules as the swellable polymer, wherein the glycosaminoglycan molecules are covalently crosslinked via crosslinks comprising a spacer group selected from the group consisting of di-, tri-, tetra-, and oligosaccharides.

2. A hydrogel product according to embodiment 1, wherein the glycosaminoglycan molecules are selected from the group consisting of hyaluronic acid, chondroitin and chondroitin sulfate, and mixtures thereof.

3. A hydrogel product according to embodiment 2, wherein the glycosaminoglycan molecules are hyaluronic acid.

4. A hydrogel product according to any one of the preceding embodiments, wherein at least 75 % of the crosslinks comprise a spacer group selected from the group consisting of di-, tri-, tetra-, and oligosaccharides.

5. A hydrogel product according to embodiment 4, wherein at least 90 % of the crosslinks comprise a spacer group selected from the group consisting of di-, tri-, tetra-, and oligosaccharides.

6. A hydrogel product according to embodiment 5, wherein at least 95 % of the crosslinks comprise a spacer group selected from the group consisting of di-, tri-, tetra-, and oligosaccharides.

7. A hydrogel product according to any one of the preceding embodiments, wherein the spacer group is a hyaluronic acid tetrasaccharide, hyaluronic acid hexasaccharide, trehalose, lactose, maltose, sucrose, cellobiose or raffinose residue.

8. A hydrogel product according to embodiment 7, wherein the spacer group is a hyaluronic acid tetrasaccharide or hyaluronic acid hexasaccharide residue.

9. A hydrogel product according to embodiment 7, wherein the spacer group is a trehalose, lactose, maltose, sucrose, cellobiose or raffinose residue.

10. A hydrogel product according to any one of the preceding embodiments, wherein the spacer group is selected from the group consisting of di-, tri-, and tetrasaccharides.

11. A hydrogel product according to any one of the preceding embodiments, wherein the crosslinks are bound to the glycosaminoglycan molecules by amide bonds.

12. A hydrogel product according to any one of the preceding embodiments, wherein at least 75 % of the bonds between glycosaminoglycan molecules and crosslinks are amide bonds.

13. A hydrogel product according to embodiment 12, wherein at least 90 % of the bonds between glycosaminoglycan molecules and crosslinks are amide bonds.

14. A hydrogel product according to embodiment 13, wherein at least 95 % of the bonds between glycosaminoglycan molecules and crosslinks are amide bonds.

15. A hydrogel product according to any one of the preceding embodiments, wherein less than 5 % of the bonds between glycosaminoglycan molecules and crosslinks are ester bonds.

16. A hydrogel product according to embodiment 15, wherein less than 1 % of the bonds between glycosaminoglycan molecules and crosslinks are ester bonds.

17. A hydrogel product according to any one of the preceding embodiments, wherein the crosslinked glycosaminoglycan molecule is in the form of gel particles having an average size in the range of 0.01-5 mm, preferably 0.1-0.8 mm.

18. A hydrogel product according to any one of the preceding embodiments, in the form of an injectable formulation.

19. A process of preparing a hydrogel product comprising crosslinked glycosaminoglycan molecules, comprising the steps of:

(a) providing a solution of glycosaminoglycan molecules;
(b) activating carboxyl groups on the glycosaminoglycan molecules with a coupling agent to form activated, glycosaminoglycan molecules;
(c) crosslinking the activated glycosaminoglycan molecules via their activated carboxyl groups using a di- or multinucleophile functional crosslinker comprising a spacer group selected from the group consisting of di-, tri-, tetra-, and oligosaccharides to obtain crosslinked glycosaminoglycan molecules.

20. A process according to embodiment 19, wherein the crosslinking of step (c) provides amide bonds between glycosaminoglycan molecules and crosslinkers.

21. A process according to any one of embodiments 19-20, wherein the activation step (b) and the crosslinking step (c) occur simultaneously.

22. A process according to any one of embodiments 19-21, wherein the coupling agent and the crosslinker are added to the glycosaminoglycan simultaneously.

23. A process according to any one of embodiments 19-20, wherein the activation step (b) occurs prior to and separately from the crosslinking step (c).

24. A process according to any one of embodiments 19-23, wherein step (c) further comprises providing particles of the crosslinked glycosaminoglycan, having an average size in the range of 0.01-5 mm, preferably 0.1-0.8 mm.

25. A process according to any one of embodiments 19-24, wherein the glycosaminoglycan molecules are selected from the group consisting of hyaluronic acid, chondroitin and chondroitin sulfate, and mixtures thereof.

26. A process according to any one of embodiments 19-25, wherein the glycosaminoglycan molecules are hyaluronic acid.

27. A process according to any one of embodiments 19-26, wherein the coupling agent of step (b) is a peptide coupling reagent.

28. A process according to embodiment 27, wherein the peptide coupling reagent is selected from the group consisting of triazine-based coupling reagents, carbodiimide coupling reagents, imidazolium-derived coupling reagents, Oxyma and COMU.

29. A process according to embodiment 28, wherein the peptide coupling reagent is a triazine-based coupling reagent.

30. A process according to embodiment 29, wherein the triazine-based coupling reagent is selected from the group consisting of 4-(4,6-dimethoxy-1,3,5-triazin-2-yl)-4-methylmorpholinium chloride (DMTMM) and 2-chloro-4,6-dimethoxy-1,3,5-triazine (CDMT).

31. A process according to embodiment 30, wherein the triazine-based coupling reagent is DMTMM.

32. A process according to embodiment 28, wherein the peptide coupling reagent is a carbodiimide coupling reagent.

33. A process according to embodiment 32, wherein the carbodiimide coupling reagent is N-(3-dimethylaminopropyl)-N'-ethylcarbodiimide (EDC) combined with N-hydroxysuccinimide (NHS).

34. A process according to any one of embodiments 19-33, wherein the spacer group is a hyaluronic acid tetrasaccharide, hyaluronic acid hexasaccharide, trehalose, lactose, maltose, sucrose, cellobiose or raffinose residue.

35. A process according to any one of embodiments 19-33, wherein the spacer group is a hyaluronic acid tetrasaccharide or hyaluronic acid hexasaccharide residue.

36. A process according to any one of embodiments 19-33, wherein the spacer group is a trehalose, lactose, maltose, sucrose, cellobiose or raffinose residue.

37. A process according to any one of embodiments 19-36, wherein the spacer group is selected from the group consisting of di-, tri-, and tetrasaccharides.

38. A process according to any one of embodiments 19-37, wherein the nucleophilic groups of the crosslinker are selected from the group consisting of primary amine, hydrazine, hydrazide, carbazate, semi-carbazide, thiosemicarbazide, thiocarbazate and aminoxy.

39. A process according to embodiment 38, wherein the nucleophilic groups of the di-, tri-, tetra-, and oligosaccharides are primary amine.

40. A process according to embodiment 39, wherein the crosslinker is a dinucleofile functional crosslinker.

41. A process according to embodiment 40, wherein the crosslinker is selected from the group consisting of diamino hyaluronic acid tetrasaccharide, diamino hyaluronic acid hexasaccharide, diamino trehalose, diamino lactose, diamino maltose, diamino sucrose, chitobiose, or diamino raffinose.

42. A process according to any one of embodiments 19-41, further comprising the step:

(d) subjecting the crosslinked glycosaminoglycan molecules obtained in step
(c) to alkaline treatment.

43. Product obtainable by the process according to any one of embodiments 19-42.

44. A hydrogel product according to any one of embodiments 1-18 and 43 for use as a medicament.

45. A hydrogel product according to embodiment 44 for use in the treatment of soft tissue disorders.

46. Use of a hydrogel product according to any one of embodiments 1-18 and 43 for the manufacture of a medicament for treatment of soft tissue disorders.

47. A method of treating a patient suffering from a soft tissue disorder by administering to the patient a therapeutically effective amount of a hydrogel product according to any one of embodiments 1-18 and 43.

48. A method of providing corrective or aesthetic treatment to a patient by administering to the patient a therapeutically effective amount of a hydrogel product according to any one of embodiments 1-18 and 43.

49. A method of cosmetically treating skin, which comprises administering to the skin a hydrogel product according to any one of embodiments 1-18 and 43.

Detailed description of the invention

The present invention provides advantageous processes for preparing hydrogels made of crosslinked glycosaminoglycan (GAG) molecules, the resulting hydrogel products and uses thereof. GAGs are negatively charged heteropolysaccharide chains which have a capacity to absorb large amounts of water. In the hydrogel products according to the invention, the crosslinked GAG molecule is the swellable polymer which provides the gel properties. The preparation process described herein is mild to the GAG molecules but provides an efficient crosslinking.

Thus, the current invention provides GAG molecule hydrogels by crosslinking in aqueous media using di- or multinucleophile functional crosslinker capable of forming covalent bonds directly with carboxylic acid groups of GAG molecules by a reaction involving the use of a coupling agent.

The GAG according to the invention is preferably selected from the group consisting of hyaluronic acid, chondroitin and chondroitin sulfate. In a preferred embodiment, the GAG molecule is hyaluronic acid. Hyaluronic acid (HA) is one of the most widely used biocompatible polymers for medical and cosmetic use. HA is a naturally occurring polysaccharide belonging to the group of glycosaminoglycans (GAGs). Hyaluronic acid and products derived from hyaluronic acid are widely used in the biomedical and cosmetic fields, for instance during viscosurgery and as a dermal filler.

Unless otherwise provided, the term "hyaluronic acid" encompasses all variants and combinations of variants

of hyaluronic acid, hyaluronate or hyaluronan, of various chain lengths and charge states, as well as with various chemical modifications. That is, the term also encompasses the various hyaluronate salts of hyaluronic acid with various counter ions, such as sodium hyaluronate. The hyaluronic acid can be obtained from various sources of animal and non-animal origin. Sources of non-animal origin include yeast and preferably bacteria. The molecular weight of a single hyaluronic acid molecule is typically in the range of 0.1-10 MDa, but other molecular weights are possible.

The term "chondroitin" refers to GAGs having a disaccharide repeating unit consisting of alternating non-sulfated D-glucuronic acid and N-acetyl-D-galactosamine moieties. For avoidance of doubt, the term "chondroitin" does not encompass any form of chondroitin sulfate.

The term "chondroitin sulfate" refers to GAGs having a disaccharide repeating unit consisting of alternating D-glucuronic acid and N-acetyl-D-galactosamine moieties. The sulfate moiety can be present in various different positions. Preferred chondroitin sulfate molecules are chondroitin-4-sulfate and chondroitin-6-sulfate.

The chondroitin molecules can be obtained from various sources of animal and non-animal origin. Sources of non-animal origin include yeast and preferably bacteria. The molecular weight of a single chondroitin molecule is typically in the range of 1-500 kDa, but other molecular weights are possible.

The crosslinked GAG comprises crosslinks between the GAG molecule chains, which creates a continuous network of GAG molecules which is held together by the covalent crosslinks.

The GAG molecule chains are preferably crosslinked to each other via crosslinkers comprising a spacer group selected from the group consisting of di-, tri-, tetra-, and oligosaccharides.

It is preferred that the crosslinkers are bound to the glycosaminoglycan molecules by amide bonds.

The crosslinked GAG product is preferably biocompatible. This implies that no, or only very mild, immune response occurs in the treated individual. That is, no or only very mild undesirable local or systemic effects occur in the treated individual.

The crosslinked product according to the invention is a gel, or a hydrogel. That is, it can be regarded as a water-insoluble, but substantially dilute crosslinked system of GAG molecules when subjected to a liquid, typically an aqueous liquid.

The gel contains mostly liquid by weight and can e.g. contain 90-99.9%, water, but it behaves like a solid due to a three-dimensional crosslinked GAG molecule network within the liquid. Due to its significant liquid content, the gel is structurally flexible and similar to natural tissue, which makes it very useful as a scaffold in tissue engineering and for tissue augmentation. It is also useful for treatment of soft tissue disorder and for corrective or aesthetic treatment. It is preferably used as an injectable formulation.

Crosslinking of the GAG molecule may be achieved by activation with a coupling agent, followed by reaction with a crosslinking agent. The GAG molecule concentration and the extent of crosslinking affect the mechanical properties, e.g. the elastic modulus G', and stability properties, of the gel. Crosslinked GAG molecule gels can be characterized in terms of "degree of modification". The degree of modification of GAG molecule gels generally range between 0.01 and 15 mole%. The degree of modification (mole%) describes the amount of crosslinking agent(s) that is bound to the GAG molecule, i.e. molar amount of bound crosslinking agent(s) relative to the total molar amount of repeating disaccharide units. The degree of modification reflects to what degree the GAG molecule has been chemically modified by the crosslinking agent. Reaction conditions for activation and crosslinking and suitable analytical techniques for determining the degree of modification are all well known to the person skilled in the art, who easily can adjust these and other relevant factors and thereby provide suitable conditions to obtain a desirable degree of modification and verify the resulting product characteristics with respect to the degree of modification.

The hydrogel product may also comprise a portion of GAG molecules which are not crosslinked, i.e not bound to the three-dimensional crosslinked GAG molecule network. However, it is preferred that at least 50 % by weight, preferably at least 60 % by weight, more preferably at least 70 % by weight, and most preferably at least 80 % by weight, of the GAG molecules in a gel composition form part of the crosslinked GAG molecule network.

The crosslinked GAG molecule is preferably present in the form of gel particles. The gel particles preferably have an average size in the range of 0.01-5 mm, preferably 0.1-0.8 mm, such as 0.2-0.5 mm or 0.5-0.8 mm.

The hydrogel product may be present in an aqueous solution, but it may also be present in dried or precipitated form, e.g. in ethanol. The hydrogel product is preferably injectable.

The hydrogel product may prepared by a process comprising the steps of:

(a) providing a solution of glycosaminoglycan molecules;
(b) activating carboxyl groups on the glycosaminoglycan molecules with a coupling agent to form activated, glycosaminoglycan molecules;
(c) crosslinking the activated glycosaminoglycan molecules via their activated carboxyl groups using a di- or multinucleophile functional crosslinker comprising a spacer group selected from the group consisting of di-, tri-, tetra-, and oligosaccharides to obtain crosslinked glycosaminoglycan molecules.

The GAG according to the invention is preferably selected from the group consisting of hyaluronic acid, chondroitin and chondroitin sulfate. In a preferred embodiment, the GAG molecule is hyaluronic acid.

In the activation step (b), the carboxyl groups on the GAG molecules are activated with a coupling agent to form activated GAG molecules.

In one preferred embodiment, the peptide coupling reagent is selected from the group consisting of triazine-based coupling reagents, carbodiimide coupling reagents, imidazolium-derived coupling reagents, Oxyma and COMU.

The peptide coupling reagent is preferably a triazine-based coupling reagent, such as 4-(4,6-dimethoxy-1,3,5-triazin-2-yl)-4-methylmorpholinium chloride (DMTMM) and 2-chloro-4,6-dimethoxy-1,3,5-triazine (CDMT). A preferred triazine-based peptide coupling reagent is DMTMM.

Other preferred peptide coupling reagent are carbodiimide coupling reagents, preferably N-(3-dimethylaminopropyl)-N'-ethylcarbodiimide (EDC) combined with N-hydroxysuccinimide (NHS).

In the crosslinking step (c), crosslinking of the activated GAG molecules occurs via their carboxyl groups using a crosslinker. The crosslinker is a di- or multinucleophile functional crosslinker comprising a spacer group selected from the group consisting of di-, tri-, tetra-, and oligosaccharides. The crosslinker connects the GAG chains to each other via carboxyl groups on the GAG backbone. The spacer group may for example be a hyaluronic acid tetrasaccharide, hyaluronic acid hexasaccharide, trehalose, lactose, maltose, sucrose, cellobiose or raffinose residue. By the term "residue" is meant here that the structure of the compound is similar but not identical to the patent compounds hyaluronic acid tetrasaccharide, hyaluronic acid hexasaccharide, trehalose, lactose, maltose, sucrose, cellobiose or raffinose respectively. The structure of the residue may differ from the structure of the parent compound in that it has been provided with two or more nucleofile functional groups and optionally covalently linked via said nucleofile functional groups carboxyl groups on the GAG backbone.

The di- or multinucleophile functional crosslinker comprises two or more functional groups capable of reacting with functional carboxyl groups of the GAG, resulting in the formation of covalent bonds, preferably amide bonds. A preferred group of di- or multinucleophile functional crosslinker includes homo- or heterobifunctional primary amines, hydrazines, hydrazides, carbazates, semi-carbazides, thiosemicarbazides, thiocarbazates and aminoxy. Non limiting examples of such heterobifunctional crosslinkers useful in the present invention include:

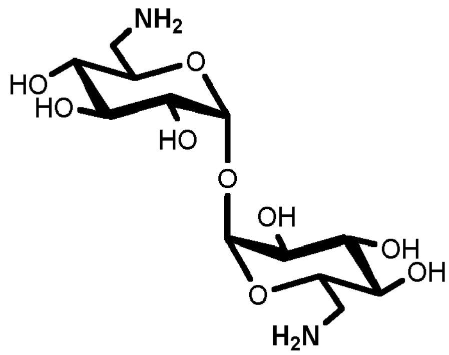

Diaminotrehalose (6,6'-diamino-6,6'-dideoxy trehalose);

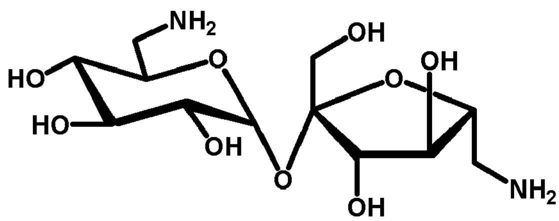

Diaminosucrose (6,6'-diamino-6,6'-dideoxy sucrose);

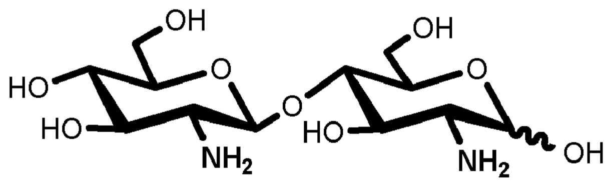

Chitobiose (2,2'-diamino-2,2'-dideoxy cellobiose);

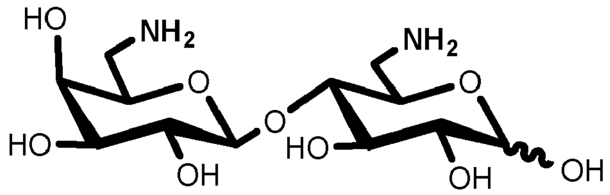

Diaminolactose (6,6'-diamino-6,6'-dideoxy lactose);

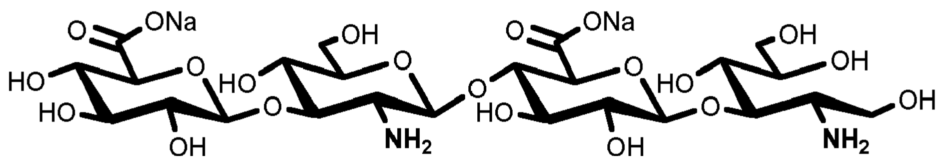

"Reduced *N*-Deacetylated hyaluronic acid tetrasaccaride" or "Reduced diamino hyaluronic acid tetrasaccharide"; and

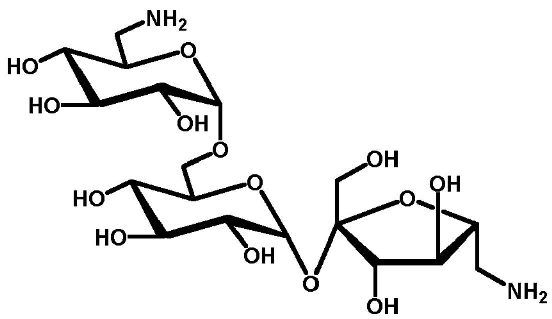

Diaminoraffinose (6,6"-diamino-6,6"-dideoxy raffinose).

Reaction schemes 1 a-1 h schematically illustrate examples of coupling by heterobifunctional primary amine (1 a), aminoxy (1b), carbazate (1c), semi-carbazide (1d), thiosemicarbazide (1e), thiocarbazate (1f), hydrazine (1g) and hydrazide (1 h)

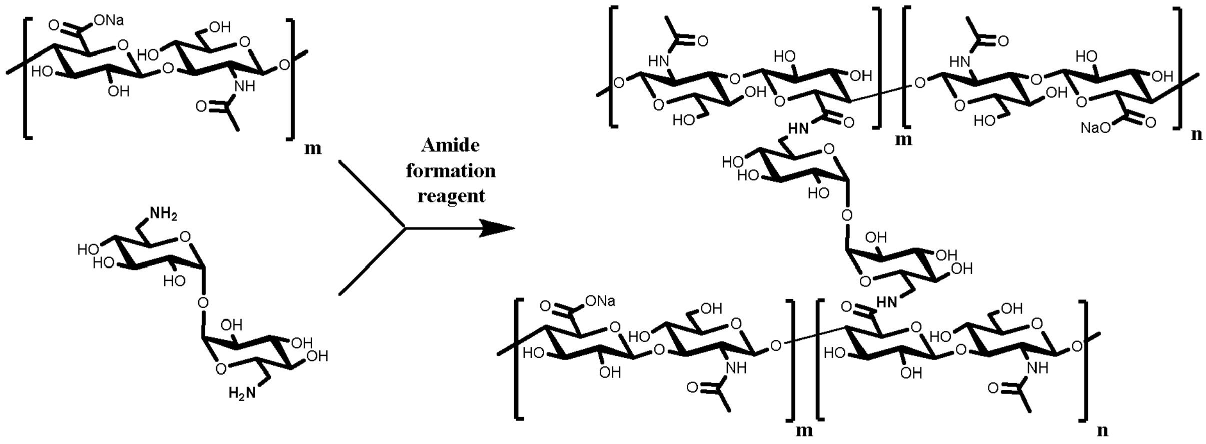


Scheme 1a

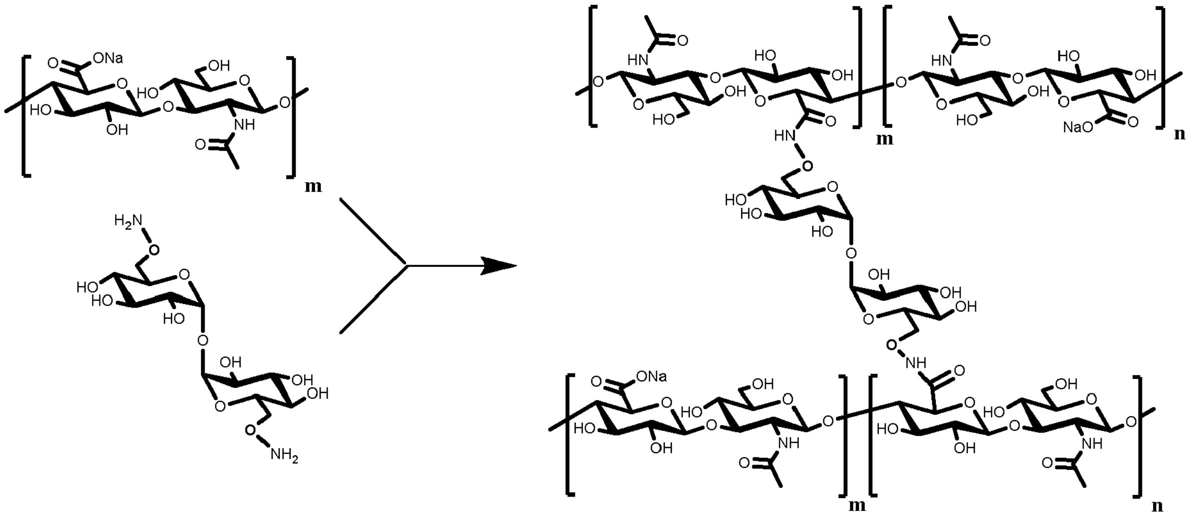

Scheme 1b

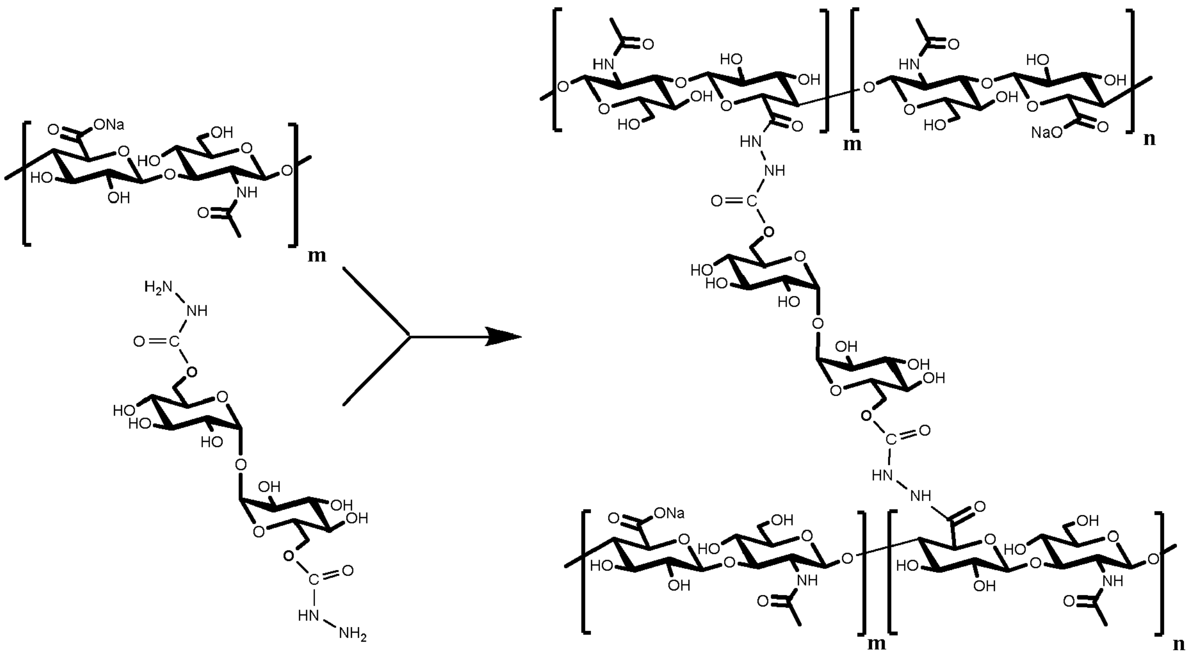

Scheme 1c

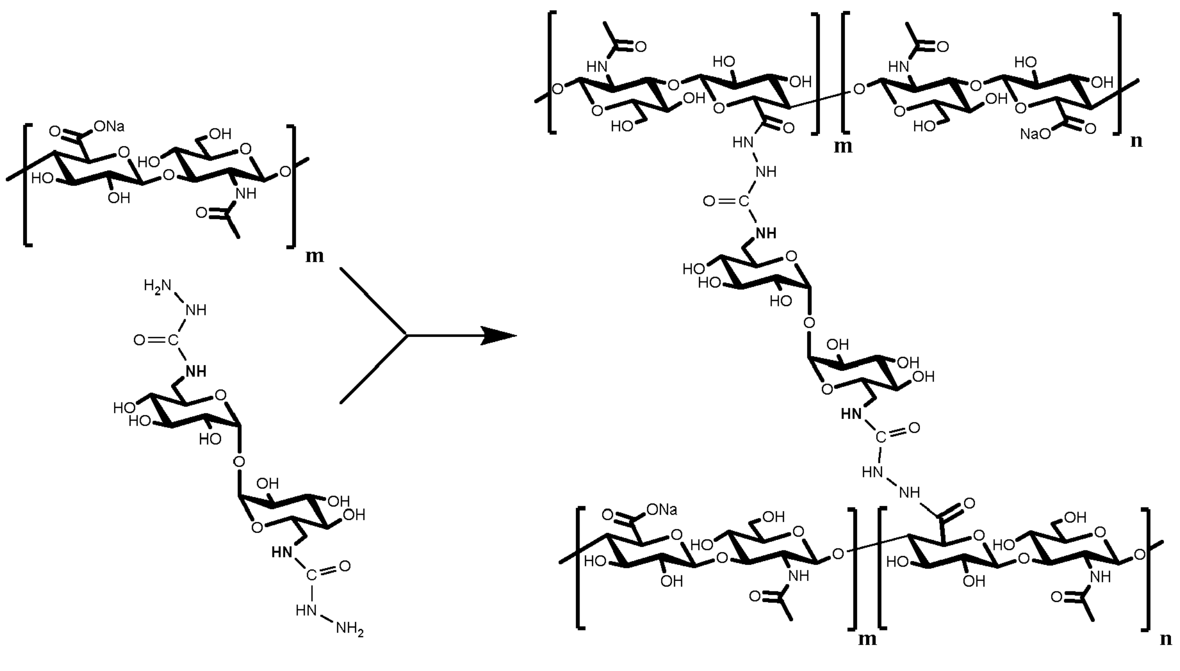

Scheme 1d

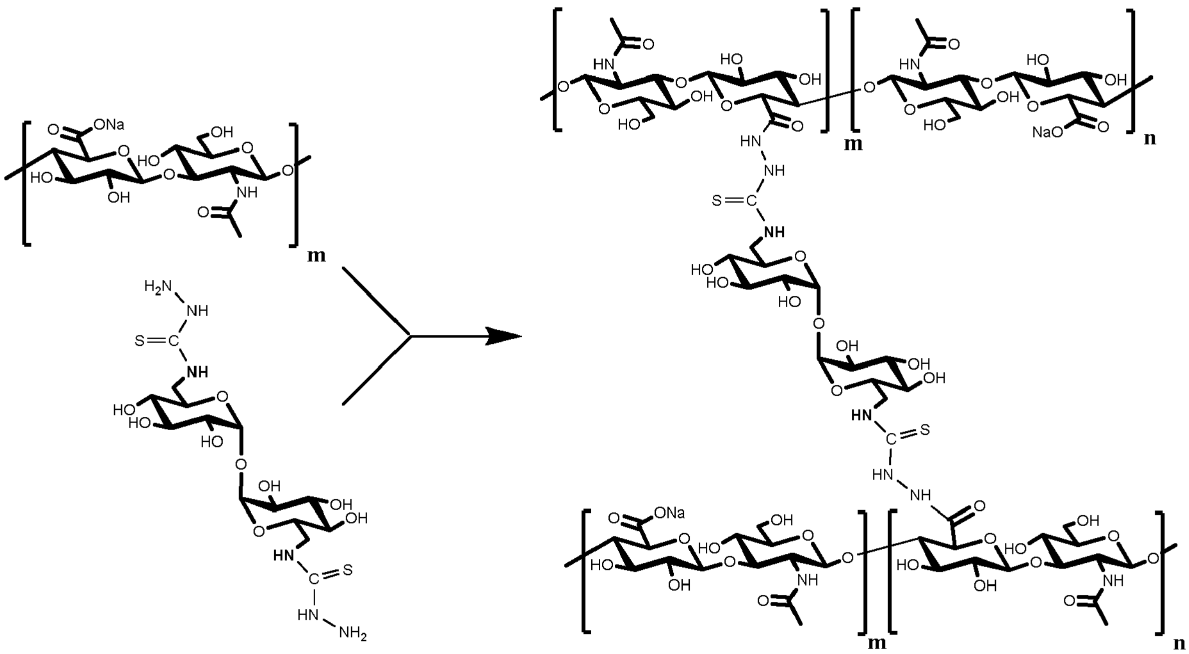

Scheme 1e

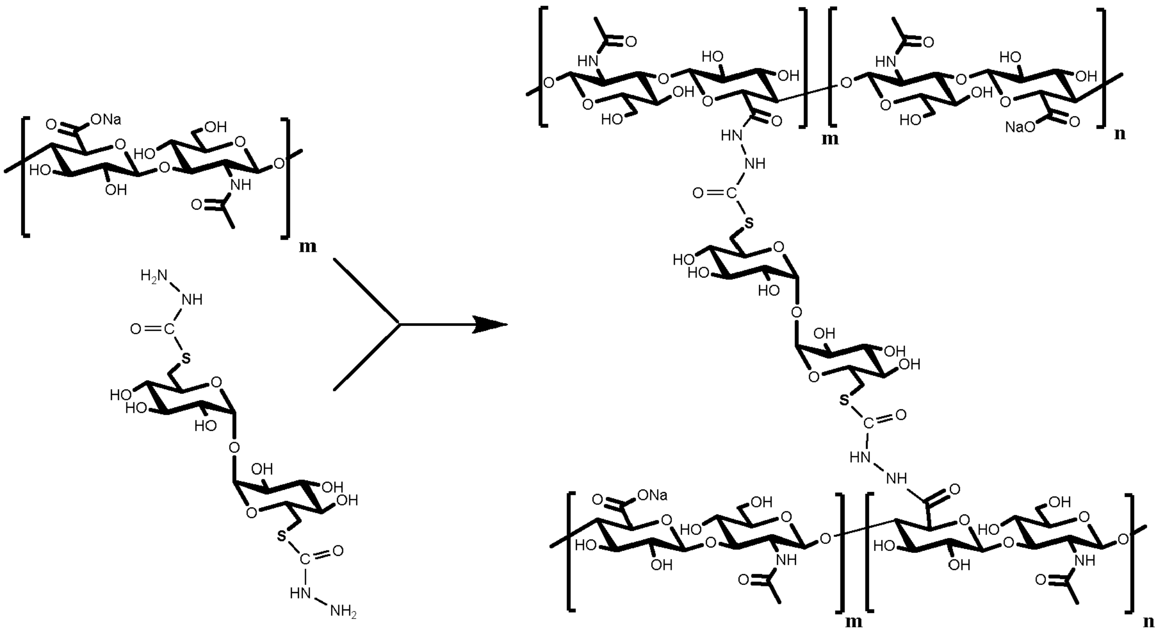

Scheme 1f

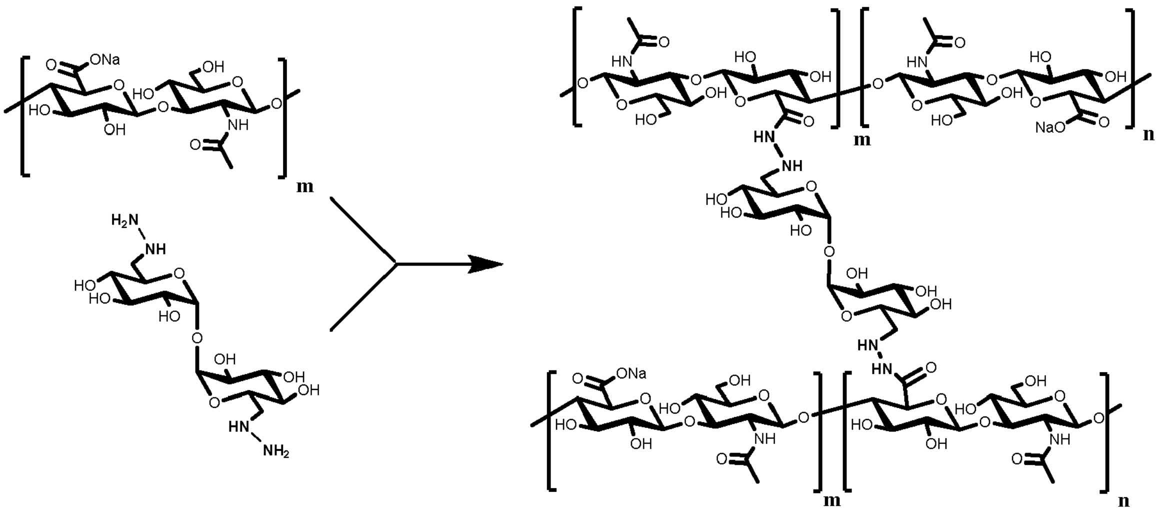

Scheme 1g

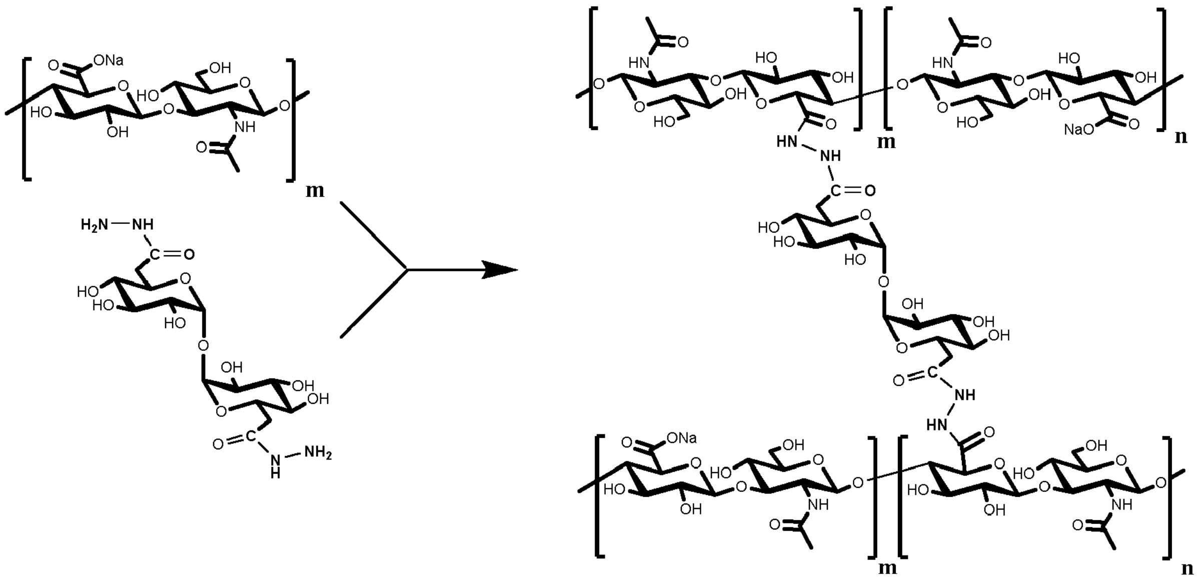

Scheme 1h

The di- or multinucleophile functional crosslinker contains a spacer group selected from the group consisting of di-, tri-, tetra-, and oligosaccharides, which remains in the crosslinks between the GAG molecules.

The process may be performed in a one-pot approach in aqueous media, involving the covalent coupling of di- or multinucleophile functional crosslinkers directly to inherent carboxylic acid groups on the native GAGs using a suitable coupling agent. In a preferred embodiment, the activation step (b) and the crosslinking step (c) occur simultaneously.

In another embodiment, the activation step (b) occurs prior to and separately from the crosslinking step (c).

The process for generating the crosslinked hydrogel typically involves preparing a mixture of a GAG molecule, such as hyaluronic acid together with a crosslinker agent, such as diamino trehalose, DATH, (0.001 - 10 molar equivalents of amine towards carboxylic acid groups, or preferably 0.001 - 1 molar equivalents) and a coupling agent such as DMTMM (0.01 - 10 molar equivalents to carboxylic acid groups, or preferably 0.05 - 1 molar equivalents). Incubating the mixture at 5 - 50 °C, preferably 10 - 40 °C or even more preferred 20 - 35 °C, during 2 - 120 hours, preferably 4 - 48 hours, followed by alkaline treatment, neutralization, precipitation, washing and dried under vacuum, yields a crosslinked polysaccharide as a solid. The precipitate was swelled in phosphate buffer containing NaCl to form a hydrogel, the hydrogel is preferably micronized to hydrogel particles in the size of 0.01 - 5 mm, preferably 0.1 - 1 mm.

A typical application of the resulting hydrogel product involves the preparation of injectable formulations for treatment of soft tissue disorders, including, but not limited to, corrective and aesthetic treatments.

Without desiring to be limited thereto, the present invention will in the following be illustrated by way of examples.

## EXAMPLES

### Example 1a to 1e - Crosslinking of HA with DATH

Diaminotrehalose (DATH) was synthesized as described in "Synthetic Carbohydrate Polymers Containing Trehalose Residues in the Main Chain: Preparation and Characteristic Properties"; Keisuke Kurita, * Naoko Masuda, Sadafumi Aibe, Kaori Murakami, Shigeru Ishii, and Shin-Ichiro Nishimurat; Macromolecules 1994, 27, 7544-7549.

A series of experiments (Examples 1 a-1 e) were performed which involved crosslinking of hyaluronic acid (HA) of different molecular weights with various molar ratios of DATH using 4-(4,6-dimethoxy-1,3,5-triazin-2-yl)-4-methylmorpholinium chloride (DMTMM) as a coupling agent. Ratios between HA, DATH and DMTMM are set out in Table 1 below.

The hyaluronan (molecular weight ($M_w$) from about 100 kDa to about 1 000 kDa) was weighed in a Falcon tube. A stock solution of diaminotrehalose (DATH) was prepared by dissolving DATH (0.001 - 0.005 equiv.) in 1 mM phosphate buffer pH 7.4. DMTMM (0.05 equiv.) was weighed in a PTFE-container and the DATH-solution was added to DMTMM to dissolve it. The pH of the DMTMM-DATH solution was adjusted to 6-7 with 1.2 M HCl and then added to the HA. The contents was thoroughly homogenized and then incubated at 35 °C for 24 h.

The resulting material was pressed through a 1 mm steel mesh two times and then treated with a NaOH solution. The gel was neutralized with 1.2 M HCl to pH 7 and then precipitated with ethanol. The resulting precipitate was washed with 100 mM NaCl in 70% ethanol to remove excess reagents and then with 70% ethanol to remove salts and finally with ethanol to remove water. Ethanol was removed in a vacuum dryer over night.

The precipitate was swelled in 0.7% NaCl 8 mM phosphate buffer pH 7.4 and then pressed through a 315 μm filter mesh three times. The gel was filled on syringes and sterilized.

Analysis:

SwF - Swelling factor analysis was done in saline.
[HA] - The HA concentration was measured with LC-SEC-UV
GelC - Gel content is a description of the percentage of hyaluronan that is a part of the gel network. A number of 90% means that only 10% of hyaluronan is not a part the network. The amount of free hyaluronan in the gel was measured with LC-SEC-UV.
SwDC - Corrected swelling degree is the total liquid uptake of one gram HA, corrected for gel content.

$$SwDC = \frac{SwF}{GelC * [HA]}$$

CrR - Effective crosslinking ratio was analyzed with LC-SEC-MS and defined as:

$$CrR = \frac{mole\ crosslinked\ DATH\ with\ amide\ bonds}{mole\ linked\ DATH\ with\ amide\ bonds}$$

A CrR of 1.0 means that all of the DATH has crosslinked.

Table 1.

| Example | <$M_w$> (MDa) | Eq DMTMM | Eq DATH | Monophasic at [HA] 50 mg/mL | CrR | GelC (%) | SwDC (ml/g) |
|---|---|---|---|---|---|---|---|
| 1a | 1.06 | 0.05 | 0.003 | No | 0.99 | NA | NA |
| 1b | 1.06 | 0.05 | 0.001 | Yes | 0.99 | 74 | 101 |
| 1c | 0.64 | 0.05 | 0.005 | Yes | NA | 93 | 38 |
| 1d | 0.31 | 0.05 | 0.005 | Yes | NA | 85 | 49 |
| 1e | 0.11 | 0.05 | 0.005 | Yes | NA | 84 | 123 |
| NA - not available since the analysis was not done | | | | | | | |

Example 2 - Crosslinking of Chondroitin Sulfate with DATH

Diaminotrehalose (DATH) is synthesized as described in "Synthetic Carbohydrate Polymers Containing Trehalose Residues in the Main Chain: Preparation and Characteristic Properties"; Keisuke Kurita, * Naoko Masuda, Sadafumi Aibe, Kaori Murakami, Shigeru Ishii, and Shin-Ichiro Nishimurat; Macromolecules 1994, 27, 7544-7549.

Chondroitin Sulfate (CS) (10 - 200 kDa) is weighed in a Falcon tube. A stock solution of diaminotrehalose (DATH) is prepared by dissolving DATH in 1 mM phosphate buffer pH 7.4. DMTMM is weighed in a vessel and the DATH-solution is added to the DMTMM. The pH of the DMTMM-DATH solution is adjusted to approx. 7 by addition of 1.2 M HCl or 0.25 M NaOH, and the mixture is subsequently added to CS. The contents is thoroughly homogenized and then incubated at 15-55 °C for 2-48 h. The resulting material is pressed through a 1 mm steel mesh two times and swelled in NaOH. The gel is neutralized with 1.2 M HCl to pH 7 and precipitated with ethanol. The resulting precipitate is washed with 100 mM NaCl in 70% ethanol, with 70% ethanol and ethanol. The obtained solid is dried at 25 °C under vacuum. The precipitate is swelled in 0.7 % NaCl 8 mM phosphate buffer pH 7.4 and pressed through a 315 μm filter mesh three times. The crosslinked CS-gel is filled on syringes and sterilized.

Example 3 - Crosslinking of HA with diaminosucrose

Diaminosucrose is prepared as described in "Library of mild and economic protocols for the selective derivatization of sucrose under microwave irradiation"; M. Teresa Barros, Krasimira T. Petrova, Paula Correia-da-Silva and Taterao M. Potewar; Green Chem., 2011, 13, 1897-1906.

Hyaluronic acid (HA) (10 - 1 000 kDa) is weighed in a vessel. A stock solution of diaminosucrose is prepared by dissolving diaminosucrose in 1 mM phosphate buffer pH 7.4. DMTMM is weighed in a vessel and the diaminosucrose-solution is added to the DMTMM. The pH of the DMTMM-diaminosucrose solution is adjusted to approx. 7 by addition of 1.2 M HCl or 0.25 M NaOH, and the mixture is subsequent added to HA. The contents are thoroughly homogenized and then incubated at 15-55 °C for 2-48 h. The resulting material is pressed through a 1 mm steel mesh two times and swelled in NaOH. The gel is neutralized with 1.2 M HCl to pH 7 and precipitated with ethanol. The resulting precipitate is washed with 100 mM NaCl in 70% ethanol, with 70% ethanol and ethanol. The obtained solid is dried at 25 °C under vacuum. The precipitate is swelled in 0.7 % NaCl 8 mM phosphate buffer pH 7.4 and pressed through a 315 μm filter mesh three times. The crosslinked HA-gel is filled on syringes and sterilized.

Example 4 - Crosslinking of HA with chitiobiose

Hyaluronic acid (HA) (10 - 1 000 kDa) is weighed in a vessel. A stock solution of chitiobiose (purchased from Carbosynth Ltd. UK) is prepared by dissolving chitobiose in 1 mM phosphate buffer pH 7.4. DMTMM is weighed in a vessel and the chitobiose-solution is added to the DMTMM. The pH of the DMTMM-chitobiose solution is adjusted to approx. 7 by addition of 1.2 M HCl or 0.25 M NaOH, and the mixture is subsequent added to HA. The contents is thoroughly homogenized and then incubated at 15-55 °C for 2-48 h. The resulting material is pressed through a 1 mm steel mesh two times and swelled in NaOH. The gel is neutralized with 1.2 M HCl to pH 7 and then precipitated with ethanol. The resulting precipitate is washed with 100 mM NaCl in 70% ethanol, with 70% ethanol and ethanol. The obtained solid is dried at 25 °C under vacuum. The precipitate is swelled in 0.7 % NaCl 8 mM phosphate buffer pH 7.4 and pressed through a 315 μm filter mesh three times. The crosslinked HA-gel is filled on syringes and sterilized.

Example 5 - Crosslinking of HA with reduced diamino HA-tetrasaccharide

Reduced diamino HA-tetrasaccharide was synthesized by according to steps 1-4 below.

Step 1:

A solution of HA-4 (500 mg, 0.61 mmol) in water (5 ml) at room temperature was treated with sodium borohyride (23.05 mg, 0.61 mmol) and the resulting solution was stirred for 3 h, concentrated to dryness to afford the reduced product 1 (532 mg, assumed 100%) as a white foam.
LCMS ($t_r$ = 0.28 min., ES+ = 779.4 (M-2 Na + 2H)

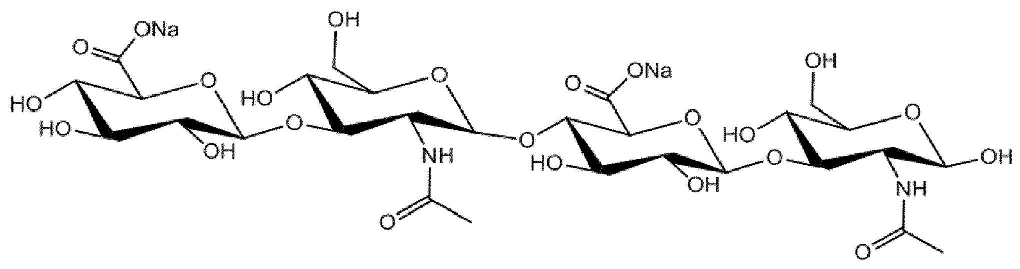

HA-4

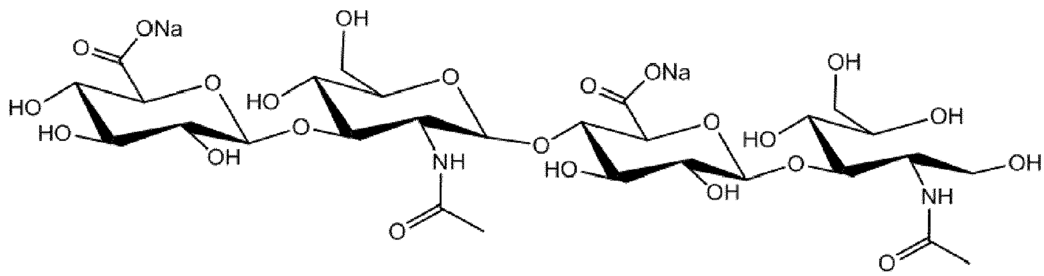

1

Step 2:

The reduced product 1 (532 mg) was dissolved in aqueous $NH_2OH$ (5 ml, 50% v/v) and solid $NH_4I$ (100 mg) was added. The resulting suspension was heated at 70 °C for 48 h, cooled to room temperature and concentrated to dryness to afford a 1:1 mixture of diamine 2 and mono-amine 3 in quantitative yield. The crude reaction product was used without further purification.

2 : LCMS ($t_r$ = 0.16 min., ES+ = 695.36 (M-2 Na + 2H)
3: LCMS ($t_r$ = 0.19 min., ES+ = 737.47 (M-2 Na + 2H)

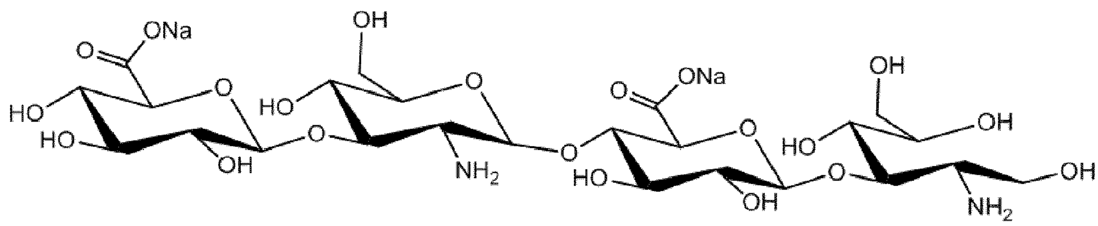

MW = 695 (ES+)

**2**

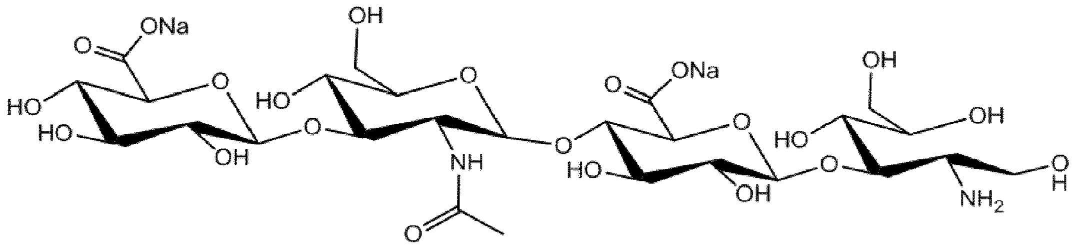

MW =737 (ES+)

**3**

Step 3:

The crude reaction product (2 and 3, assumed 0.61 mmol) was suspended in a mixture of MeOH-$H_2O$-TEA (11 ml, 9:1:1) and Boc-O-Boc (265 mg, 1.22 mmol, 2 eq based 500 mg of diamine starting material) was added. The resulting suspension was heated at 70 °C for 3 h, cooled and concentrated to dryness to afford a mixture of mono-Boc and di-Boc products as a yellow foam. The foam was dissolved in water and purified by mass-triggered preparative LCMS using a Waters X-Terra reverse-phase column (C-18, 5 microns silica, 19 mm diameter, 100 mm length, flow rate of 40 ml / minute) and decreasingly polar mixtures of water (containing 0.1% formic acid) and acetonitrile as eluent. The fractions containing the desired compounds were concentrated to dryness to afford 4 (215 mg, 42%) and 5 (243 mg, 48%) as white solids.

4 : LCMS ($t_r$ = 1,07 min., ES+ = 795.16 (M-2 Na, -Boc + 2H)
5: LCMS ($t_r$ = 1.15 min., ES+ = 837.26 (M-2 Na + 2H)

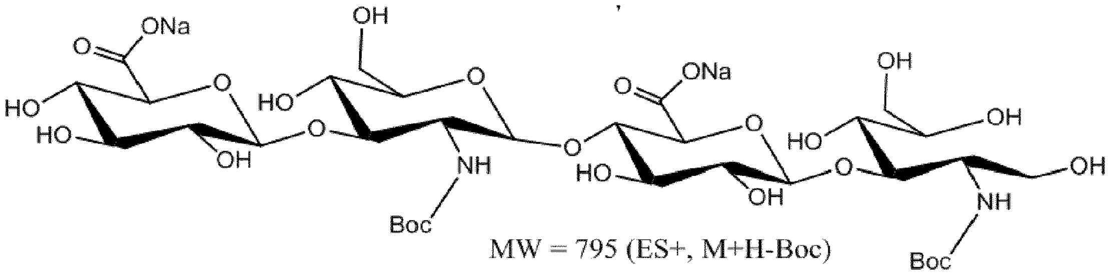

MW = 795 (ES+, M+H-Boc)

**4**

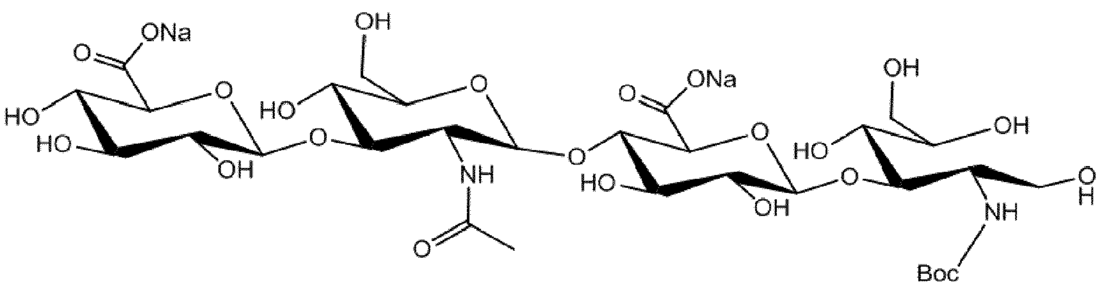

MW =737 (ES+)

**5**

Step 4:

A suspension of 4 (215 mg, 0.24 mmol) in DCM (2 ml) at 0 °C was treated with TFA (2 ml) and the reaction mixture was stirred at r.t. for 1 h, concentrated to dryness. The reaction product was dissolved in MeOH and treated

with a 4.0 M solution of HCl in dioxane (0.18 ml, 0.72 mmol, 3 eq) and the resulting white precipitate was filtered, washed with ether (5 ml) and dried to a constant weight to afford **2**.HCl (145 mg, 79%) as a thick white precipitate.

Crosslinking of HA:

Hyaluronic acid (HA) (10 - 1 000 kDa) is weighed in a vessel. A stock solution of the reduced diamino HA-tetrasaccharide is prepared by dissolving reduced diamino HA-tetrasaccharide in 1 mM phosphate buffer pH 7.4. DMTMM is weighed in a vessel and the reduced diamino HA-tetrasaccharide solution is added to the DMTMM. The pH of the DMTMM and reduced diamino HA-tetrasaccharide solution is adjusted to approx. 7 by addition of 1.2 M HCl or 0.25 M NaOH, and the mixture is subsequent added to HA. The contents is thoroughly homogenized and incubated at 15-55 °C for 2-48 h. The resulting material is pressed through a 1 mm steel mesh two times and swelled in NaOH. The gel is neutralized with 1.2 M HCl to pH 7 and precipitated with ethanol. The resulting precipitate is washed with 100 mM NaCl in 70% ethanol, with 70% ethanol and ethanol. The obtained solid is dried at 25 °C under vacuum. The precipitate is swelled in 0.7% NaCl 8 mM phosphate buffer pH 7.4 and pressed through a 315 μm filter mesh three times. The crosslinked HA-gel is filled on syringes and sterilized.

<u>Example 6 - Crosslinking of HA with dicarbazate trehalose</u>

α,α-D-Trehalose (1 equiv.) (anhydrous) (Carbosynth Ltd. UK) is dissolved in dry dimethylformamid (DMF), and triethylamine (2-6 equiv.) is added subsequently. The flask is cooled to 0 °C (ice/water) and under $N_2$-atmosphere. 4-Nitrophenyl chloroformate (2-6 equiv.) is added into the flask dropwise. The resulting mixture is allowed to stir at room temperature for 2-48 h and then concentrated, purified by FC and dried under vacuum. The product is dissolved in DMF, and hydrazine monohydrate (2-20 equiv.) is added to the solution and stirred at 0 - 50 °C for 4 - 48 h. The reaction is then concentrated, purified by FC and dried under vacuum to obtain α,α-D-6,6'-dideoxy-6,6'-dicarbazate trehalose (dicarbazate trehalose, DCT).

Hyaluronic acid (HA) (10 - 1 000 kDa) is weighed in a vessel. A stock solution of dicarbazate trehalose (DCT) is prepared by dissolving DCT in 1 mM phosphate buffer pH 7.4. DMTMM is weighed in a vessel and the DCT-solution is added to the DMTMM. The pH of the DMTMM-DCT solution is adjusted to approx. 7 by addition of 1.2 M HCl or 0.25 M NaOH, and the mixture is subsequent added to HA. The contents is thoroughly homogenized and incubated at 15-55 °C for 2-48 h. The resulting material is pressed through a 1 mm steel mesh two times and swelled in NaOH. The gel is neutralized with 1.2 M HCl to pH 7 and precipitated with ethanol. The resulting precipitate is washed with 100 mM NaCl in 70% ethanol, with 70% ethanol and ethanol. The obtained solid is dried at 25 °C under vacuum. The precipitate is swelled in 0.7 % NaCl 8 mM phosphate buffer pH 7.4 and then pressed through a 315 μm filter mesh three times. The crosslinked HA-gel is filled on syringes and sterilized.

<u>Example 7 - Crosslinking of HA with diaminoxytrehalose</u>

To a stirred suspension of α,α-D-Trehalose (1 equiv.) (anhydrous) (Carbosynth Ltd. UK) in anhydrous THF, N-hydroxyphthalimide (2-10 equiv.) and triphenylphosphine (2-10 equiv.) is added, and the mixture is stirred for 5-60 min. Diisopropyl azodicarboxylate (DIAD, 2-10 equiv.) is then added dropwise at 0 - 40 °C and the mixture is stirred for 2-48 h at 0 - 40 °C. The solvent is removed in vacuo and the crude product is purified by FC and dried under vacuum. A suspension of the product in a mixture of MeOH and $CH_2Cl_2$ is treated with hydrazine monohydrate (2-20 qeuiv.), and the mixture is stirred at 0 - 40 °C for 2-24 h followed by concentration, purification by FC and drying under vacuum to obtain the diaminoxytrehalose.

Hyaluronic acid (HA) (10 - 1 000 kDa) is weighed in a vessel. A stock solution of diaminoxytrehalose (DAOT) is prepared by dissolving DAOT in 1 mM phosphate buffer pH 7.4. DMTMM is weighed in a vessel and the DAOT-solution is added to the DMTMM. The pH of the DMTMM-DAOT solution is adjusted to approx. 7 by addition of 1.2 M HCl or 0.25 M NaOH, and the mixture is subsequent added to HA. The contents are thoroughly homogenized and incubated at 15-55 °C for 2-48 h. The resulting material is pressed through a 1 mm steel mesh two times and swelled in NaOH. The gel is neutralized with 1.2 M HCl to pH 7 and precipitated with ethanol. The resulting precipitate is washed with 100 mM NaCl in 70% ethanol, with 70% ethanol and ethanol. The obtained solid is dried at 25 °C under vacuum. The precipitate is swelled in 0.7% NaCl 8 mM phosphate buffer pH 7.4 and then pressed through a 315 μm filter mesh three times. The crosslinked HA-gel is filled on syringes and sterilized.

## Claims

**1.** A hydrogel product comprising glycosaminoglycan molecules as the swellable polymer, wherein the glycosaminoglycan molecules are covalently crosslinked via crosslinks comprising a spacer group selected from the group consisting of di-, tri-, tetra-, and oligosaccharides.

**2.** A hydrogel product according to claim 1, wherein the glycosaminoglycan molecules are hyaluronic acid.

**3.** A hydrogel product according to any one of the preceding claims, wherein at least 75 % of the crosslinks comprise a spacer group selected from the group consisting of di-, tri-, tetra-, and oligosaccharides.

**4.** A hydrogel product according to any one of the preceding claims, wherein the spacer group is a hyaluronic acid tetrasaccharide, hyaluronic acid hexasaccharide, trehalose, lactose, maltose, sucrose, cellobiose or raffinose residue.

**5.** A hydrogel product according to any one of the preceding claims, wherein the spacer group is selected from the group consisting of di-, tri-, and tetrasaccharides.

**6.** A hydrogel product according to any one of the preceding claims, wherein at least 90 % of the bonds between glycosaminoglycan molecules and crosslinks are amide bonds.

**7.** A hydrogel product according to any one of the preceding claims, wherein less than 5 % of the bonds between glycosaminoglycan molecules and crosslinks are ester bonds.

**8.** A hydrogel product according to any one of the preceding claims, in the form of an injectable formulation.

**9.** A process of preparing a hydrogel product comprising crosslinked glycosaminoglycan molecules, comprising the steps of:

(a) providing a solution of glycosaminoglycan molecules;
(b) activating carboxyl groups on the glycosaminoglycan molecules with a coupling agent to form activated, glycosaminoglycan molecules;
(c) crosslinking the activated glycosaminoglycan molecules via their activated carboxyl groups using a di- or multinucleophile functional crosslinker comprising a spacer group selected from the group consisting of di-, tri-, tetra-, and oligosaccharides to obtain crosslinked glycosaminoglycan molecules.

**10.** A process according to claim 9, wherein the glycosaminoglycan molecules are hyaluronic acid.

**11.** A process according to any one of claims 9-10, wherein the spacer group is a hyaluronic acid tetrasaccharide, hyaluronic acid hexasaccharide, trehalose, lactose, maltose, sucrose, cellobiose or raffinose residue.

**12.** A process according to any one of claims 9-11, wherein the spacer group is selected from the group consisting of di-, tri-, and tetrasaccharides.

**13.** A process according to any one of claims 9-12, wherein the nucleophilic groups of the crosslinker are selected from the group consisting of primary amine, hydrazine, hydrazide, carbazate, semi-carbazide, thiosemicarbazide, thiocarbazate and aminoxy.

**14.** A process according to any one of claims 9-13, wherein the crosslinking of step (c) provides amide bonds between glycosaminoglycan molecules and crosslinkers.

**15.** A process according to any one of claims 9-14, wherein the peptide coupling reagent is a triazine-based coupling reagent, preferably DMTMM.

**16.** A method of cosmetically treating skin, which comprises administering to the skin a hydrogel product according to any one of claims 1-8 or a hydrogel product obtainable by a method according to any one of claims 9-15.

Europäisches Patentamt
European Patent Office
Office européen des brevets

# EUROPEAN SEARCH REPORT

Application Number
EP 15 20 2944

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/053987 A1 (BAYER THOMAS [IL] ET AL) 8 March 2007 (2007-03-08)<br>* paragraphs [0006], [0008], [0173], [0205], [0287] - [0290], [0303], [0304], [0311]; claims *<br>----- | 1-16 | INV.<br>C08B37/00<br>C08B37/08<br>C08J3/075 |
| X | EP 2 727 597 A1 (CENTRE NAT RECH SCIENT [FR]; UNIV GRENOBLE 1 [FR])<br>7 May 2014 (2014-05-07)<br>* page 10 - page 11; examples 3,4,9,10 *<br>----- | 1-5,8,16 | |

| TECHNICAL FIELDS SEARCHED (IPC) |
|---|
| C08B<br>C08J |

The present search report has been drawn up for all claims

1

| Place of search | Date of completion of the search | Examiner |
|---|---|---|
| Munich | 2 June 2016 | Vaccaro, Eleonora |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 15 20 2944

This annex lists the patent family members relating to the patent documents cited in the above-mentioned European search report. The members are as contained in the European Patent Office EDP file on
The European Patent Office is in no way liable for these particulars which are merely given for the purpose of information.

02-06-2016

| Patent document cited in search report | Publication date | Patent family member(s) | Publication date |
|---|---|---|---|
| US 2007053987 A1 | 08-03-2007 | AU 2006286158 A1 | 08-03-2007 |
| | | BR PI0615065 A2 | 03-05-2011 |
| | | CA 2620663 A1 | 08-03-2007 |
| | | EP 1937701 A2 | 02-07-2008 |
| | | JP 2009507103 A | 19-02-2009 |
| | | KR 20080080481 A | 04-09-2008 |
| | | US 2007053987 A1 | 08-03-2007 |
| | | WO 2007026362 A2 | 08-03-2007 |
| EP 2727597 A1 | 07-05-2014 | CA 2887324 A1 | 15-05-2014 |
| | | EP 2727597 A1 | 07-05-2014 |
| | | EP 2916848 A1 | 16-09-2015 |
| | | JP 2015537078 A | 24-12-2015 |
| | | US 2015283247 A1 | 08-10-2015 |
| | | WO 2014072330 A1 | 15-05-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **LAUDER, R.M.** *Complement Ther Med,* 2009, vol. 17, 56-62
- **KEISUKE KURITA ; NAOKO MASUDA ; SADAFUMI AIBE ; KAORI MURAKAMI ; SHIGERU ISHII ; SHIN-ICHIRO NISHIMURAT.** Synthetic Carbohydrate Polymers Containing Trehalose Residues in the Main Chain: Preparation and Characteristic Properties. *Macromolecules,* 1994, vol. 27, 7544-7549
- **M. TERESA BARROS ; KRASIMIRA T. PETROVA ; PAULA CORREIA-DA-SILVA ; TATERAO M. POTEWAR.** Library of mild and economic protocols for the selective derivatization of sucrose under microwave irradiation. *Green Chem.,* 2011, vol. 13, 1897-1906